# EUROPEAN PATENT SPECIFICATION

(11) **EP 3 639 999 B1**
(45) Date of publication and mention of the grant of the patent: **14.04.2021**
(21) Application number: 19201595.6
(22) Date of filing: 07.10.2019
(51) Int. Cl.: B29C 45/66, B29C 45/83, B29C 45/76

(54) **INJECTION MOLDING MACHINE**
SPRITZGIESSMASCHINE
MACHINE DE MOULAGE À INJECTION

(30) Priority: 17.10.2018 JP 2018195969
(43) Date of publication of application: 22.04.2020
(73) Proprietor: SUMITOMO HEAVY INDUSTRIES, LTD., Tokyo 141-6025 (JP)
(72) Inventor: MOROZUMI, Tomohito, Chiba-shi, Chiba, 263-0001, (JP); TANAKA, Yoshitada, Chiba-shi, Chiba, 263-0001, (JP); ITO, Yosuke, Chiba-shi, Chiba, 263-0001, (JP)
(74) Representative: Louis Pöhlau Lohrentz

(56) References cited:
- EP-A1- 0 439 626
- EP-A1- 1 442 864
- EP-A1- 2 607 048
- AT-A4- 509 983
- JP-A- 2018 051 640

## Description

### BACKGROUND OF THE INVENTION

### Field of the Invention

The present invention relates to an injection molding machine.

### Description of Related Art

An injection molding machine which opens or closes a mold or clamps the mold using a toggle link mechanism is known. The toggle link mechanism is connected by a link and a connection pin, and a bush is provided between the link and the connection pin. In the toggle link mechanism, if the mold is repeatedly opened and closed, the bush and the connection pin slide, and thus, the bush is worn.

Accordingly, a method of increasing lubricity of a sliding surface by interposing a lubricant such as oil between the bush and the connection pin to reduce the wear of the bush is known. Japanese Unexamined Patent Publication No. 2000-141436 discloses a lubrication device of a toggle link mechanism having a seal structure including seal grooves provided on both end portions of a bush inner diameter surface and seal materials fitted to the seal grooves. Japanese Unexamined Patent Publication No. 2018-051640 discloses a state detection device of a lubrication target portion for an injection molding machine. European Unexamined Patent Publication No. 1442864 discloses an injection molding machine capable of determining which section of a lubrication system is abnormal. European Unexamined Patent Publication No. 0439626 discloses an automatic lubricant supplying method and an apparatus for an injection molding machine. Austrian Unexamined Patent Publication No. 509983 discloses a lubricating device for an injection molding machine.

### SUMMARY OF THE INVENTION

Meanwhile, if a bush is worn, there is a concern that a sealed internal lubricant leaks out. If the lubricant leaks out, for example, there is a concern that the lubricant adheres to a molding product. Accordingly, unscheduled maintenance is required, and recovery takes times.

Accordingly, an object of the present invention is to provide an injection molding machine which prevents a leakage of the lubricant.

According to an aspect of the present invention, there is provided an injection molding machine including: a toggle mechanism which connects a movable platen and a rear platen, in which the toggle mechanisms includes a plurality of links, a first connection portion which connects the movable platen and the link, a second connection portion which connects the links to each other, and a third connection portion which connects the rear platen and the link, and at least one of the first to third connection portions includes a bush, a connection pin which is inserted into the bush, a supply channel through which a lubricant is supplied to a bearing gap which is a gap between the bush and the connection pin, a discharge channel through which the lubricant is discharged from the bearing gap, a seal member which seals the bearing gap, and a wear detection unit which detects wear of sliding surfaces of the bush and the connection pin, and the wear detection unit detects a position of at least one of the plurality links, the movable platen, and/or the rear platen in a mold opening or closing direction when a mold is clamped.

According to the present invention, it is possible to provide the injection molding machine which prevents leakage of the lubricant.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a cross-sectional schematic view explaining a lubrication structure of a connection pin and a bush in a connection portion of a first embodiment.
Fig. 4 is a cross-sectional schematic view explaining a lubrication structure of a connection pin and a bush in a connection portion of a second embodiment.
Fig. 5 is a cross-sectional schematic view explaining a lubrication structure of a connection pin and a bush in a connection portion of a third embodiment.
Fig. 6 is a cross-sectional schematic view explaining a lubrication structure of a connection pin and a bush in a connection portion of a fourth embodiment.
Fig. 7 is a cross-sectional schematic view explaining a lubrication structure of a connection pin and a bush in a connection portion of a fifth embodiment.
Figs. 8A and 8B are partially enlarged cross-sectional schematic views of the fifth embodiment.
Figs. 9A and 9B are cross-sectional schematic views explaining a wear detection unit of a sixth embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

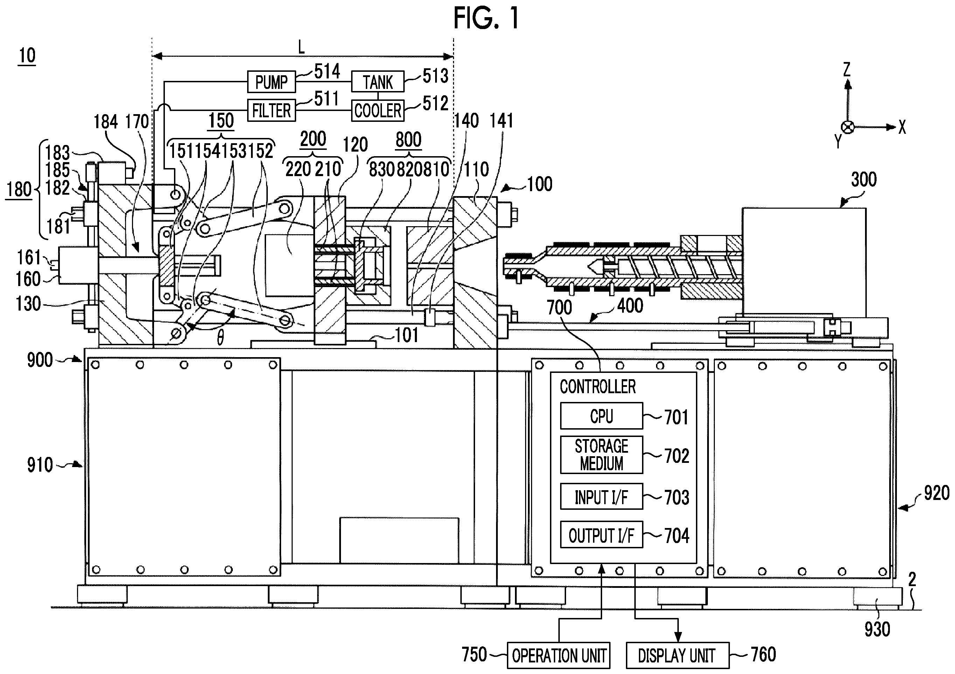

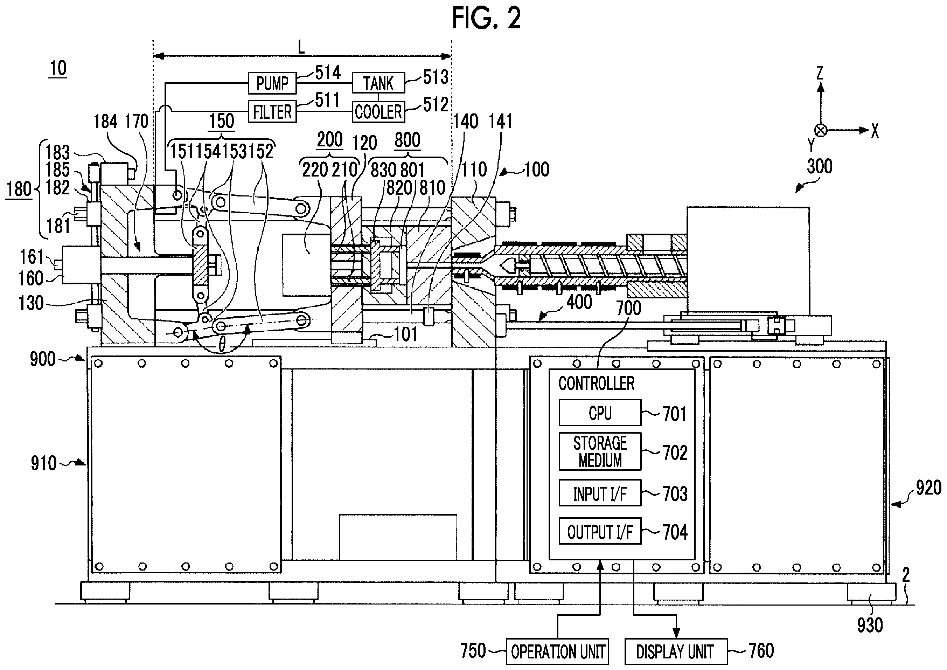

Fig. 1 is a view showing a state when mold opening of an injection molding machine according to an embodiment is completed. Fig. 2 is a view showing a state when a mold of the injection molding machine according to the embodiment is clamped. In Figs . 1 and 2, an X axis direction, a Y axis direction, and a Z axis direction are directions perpendicular to each other. The X axis direction and the Y axis direction indicate a horizontal direction, and the Z axis direction indicates a vertical direction. In a case where the mold clamping unit 100 is a horizontal type mold clamping unit, the X axis direction is mold opening and closing directions, and the Y axis direction is a width direction of an injection molding machine 10. A negative side in the Y axis direction is referred to as an operation side, and a positive side in the Y axis direction is referred to as a counter operation side.

As shown in Figs. 1 and 2, the injection molding machines 10 include the mold clamping unit 100, an ejector unit 200, an injection unit 300, a movement unit 400, a controller 700, and a frame 900. The frame 900 includes a mold clamping unit frame 910 and an injection unit frame 920. Each of the mold clamping unit frame 910 and the injection unit frame 920 is installed on a floor 2 via a leveling adjuster 930. The controller 700 is disposed in an internal space of the injection unit frame 920. Hereinafter, each component of the injection molding machine 10 will be described.

### (Mold Clamping Unit)

In descriptions of the mold clamping unit 100, a movement direction (X axis positive direction) of a movable platen 120 when a mold is closed is defined as a front side, and a movement direction (X axis negative direction) of the movable platen 120 when the mold is open is defined as a rear side.

The mold clamping unit 100 performs mold closing, pressure rising, mold clamping, decompression, and mold opening of a mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, the mold closing, the pressure rising, the mold clamping, the decompression, and the mold opening of the mold clamping unit 800 are performed.

The toggle support 130 is connected so as to be separated from the stationary platen 110, and is placed on the mold clamping unit frame 910 to be movable in mold opening and closing directions. In addition, the toggle support 130 may be disposed to be movable along a guide which is placed on the mold clamping unit frame 910. The guide of the toggle support 130 may be also used as the guide 101 of the movable platen 120.

In addition, in the present embodiment, the stationary platen 110 is disposed to be fixed to the mold clamping unit frame 910, and the toggle support 130 is disposed to be movable in the mold opening and closing directions with respect to the mold clamping unit frame 910. However, the toggle support 130 may be disposed to be fixed to the mold clamping unit frame 910, and the stationary platen 110 may be disposed to be movable in the mold opening and closing directions with respect to the mold clamping unit frame 910.

The tie bar 140 connects the stationary platen 110 and the toggle support 130 with a gap L in the mold opening and closing directions. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected by pins or the like. The first link 152 is attached to the movable platen 120 so as to be oscillated by pins or like. The second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotarymotion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressure rising process, a mold clamping process, a decompression process, a mold opening process, or the like under the control of the controller 700.

In the mold closing process, the mold clamping motor 160 is driven and the crosshead 151 moves forward to a mold closing completion position at a set movement speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressure rising process, the mold clamping motor 160 is further driven, the crosshead 151 further moves forward from the mold closing completion position to a mold clamping position, and thus, the mold clamping force is generated.

In the mold clamping process, the mold clamping motor 160 is driven, and the position of the crosshead 151 is maintained at the mold clamping position. In the mold clamping process, the mold clamping force generated in the pressure rising process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

One cavity space 801 may be provided or a plurality of cavity spaces 801 may be provided. In the latter case, a plurality of molding products can be simultaneously obtained. An insert material may be disposed in a portion of the cavity space 801, and the other portion of the cavity space 801 may be filled with the molding material. The insert material and the molding material are integrated with each other, and thus, the molding product can be obtained.

In the decompression process, the mold clamping motor 160 is driven, and the crosshead 151 moves rearward from the mold clamping position to a mold opening start position. Accordingly, the movable platen 120 moves rearward, and the mold clamping force is reduced. The mold opening start position and the mold closing completion position may be the same position as each other.

In the mold opening process, the mold clamping motor 160 is driven and the crosshead 151 moves rearward from the mold opening start position to a mold opening completion position at a set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressure rising process, and the mold clamping process are collectively set as a series of setting conditions. For example, a movement speed or position (including mold opening start position, movement speed switching position, mold closing completion position, and mold clamping position) of the crosshead 151 and the mold clamping force in the mold closing process and the pressure rising process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the decompression process and the mold opening process . For example, the movement speed or positions (mold opening start position, movement speed switching position, and mold opening completion position) of the crosshead 151 in the decompression process and the mold opening process are collectively set as a series of setting conditions. The mold opening start position, the movement speed switching position, and the mold opening completion position are arranged in this order from the from side to the rear side and indicate start points and end points of sections where the movement speed is set. The movement speed is set for each section. The movement speed switching position may be one or more. The movement speed switching position may not be set. The mold opening start position and the mold closing completion position are the same as each other. Moreover, the mold opening completion position and the mold closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 820 comes into contact with the stationary mold 810 becomes a predetermined angle.

The mold clamping unit 100 includes the mold space adjustment mechanism 180. The mold space adjustment mechanisms 180 performs the mold space adjustment by adjusting the gap L between the stationary platen 110 and the toggle support 130. In addition, for example, a timing of the mold space adjustment is performed from an end of the molding cycle to a start of the next molding cycle. For example, the mold space adjustment mechanism 180 includes a screw shaft 181 which is formed on a rear end portion of the tie bar 140, a screw nut 182 which is supported by the toggle support 130 to be rotatable and immovable forward or rearward, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, a position of the toggle support 130 with respect to the tie bar 140 is adjusted, and thus, the gap L between the stationary platen 110 and the toggle support 130 is adjusted. Moreover, a combination of a plurality of the mold space adjustment mechanisms may be used.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

The ejector unit 200 is attached to the movable platen 120 and moves forward or rearward together with the movable platen 120. The ejector unit 200 performs an ejection process under the control of the controller 700. In the ejection process, an ejector rod 210 is moved forward from a standby position to an ejection position at a set movement speed by a driving mechanism 220, and thus, a movable member 830 is moved forward and the molding product is ejected. Thereafter, the ejector rod 210 is moved rearward at a set movement speed by the driving mechanism 220, and thus, the movable member 830 is moved rearward to an original standby position.

### (Injection Unit)

The injection unit 300 is disposed to be movable forward or rearward with respect to the mold unit 800. The injection unit 300 comes into contact with the mold unit 800, and thus, the cavity space 801 in the mold unit 800 is filled with the molding material. The injection unit 300 performs a plasticizing process, a filling process, a holding pressure process, or the like under the control of the controller 700. The filling process and holding pressure process are collectively referred to as an injection process. In the plasticizing process, a predetermined amount of liquid molding material is accumulated. In the filling process, the cavity space 801 in the mold unit 800 is filled with the liquid molding material accumulated in the plasticizing process. In the holding pressure process, a holding pressure of the molding material is maintained at a set pressure.

### (Movement Unit)

The movement unit 400 moves the injection unit 300 forward or rearward with respect to the mold unit 800.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressure rising process, the mold clamping process, the filling process, the holding pressure process, a cooling process, the decompression process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressure rising process, the mold clamping process, the filling process, the hold pressure process, the cooling process, the decompression process, the mold opening process, and the ejection process in this order. Here, this order is an order of the start of each process. The filling process, the holding pressure process, and the cooling process are performed between the mold clamping processes. The start of the mold clamping process may coincide with the start of the filling process. The end of the decompression process coincides with the start of the mold opening process.

In addition, in order to shorten the molding cycle time, the plurality of processes may be simultaneously performed.

In addition, the once molding cycle may include a process other than includes the plasticizing process, the mold closing process, the pressure rising process, the mold clamping process, the filling process, the hold pressure process, the cooling process, the decompression process, the mold opening process, and the ejection process.

The controller 700 is connected to an operation unit 750 or the display unit 760. The operation unit 750 receives an input operation from a user and outputs a signal corresponding to the input operation to the controller 700. The display unit 760 displays a display screen corresponding to the input operation of the operation unit 750 under the control of the controller 700.

The operation screen is used for the setting of the injection molding machine 10 or the like. A plurality of display screens are provided, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other but may be provided independently. In addition, a plurality of the operation units 750 may be provided. The operation unit 750 and the display unit 760 are disposed on the negative side of the mold clamping unit 100 (more specifically, the stationary platen 110) in the Y axis direction. The negative side in the Y axis direction is referred to as the operation side, and the positive side in the Y axis direction is referred to as the counter operation side.

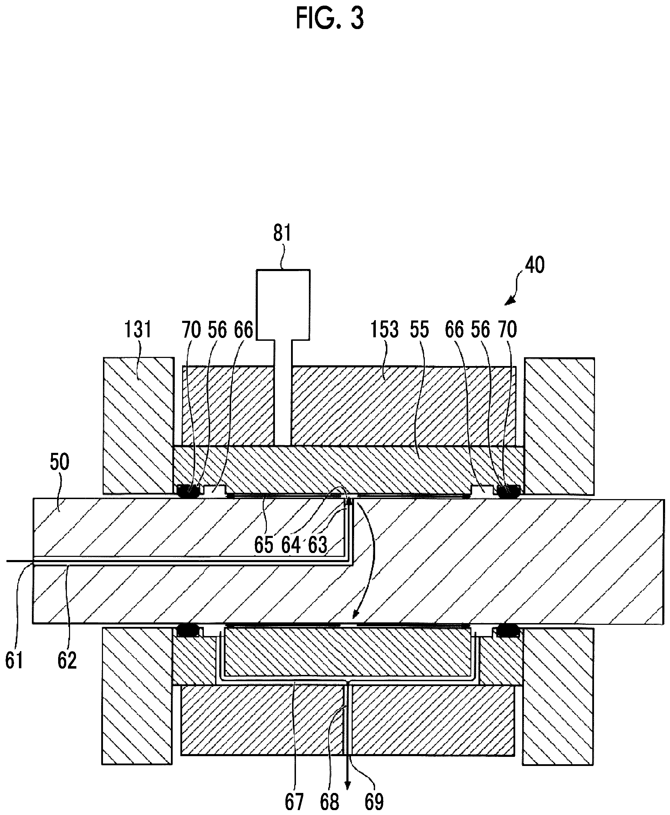

In the toggle mechanisms 150, a connection portion which connects a bearing 121 of the movable platen 120 and the first link 152 by a connection pin is formed. Similarly, in the toggle mechanisms 150, a connection portion which connects the first link 152 and the second link 153 by a connection pin is formed. In the toggle mechanism 150, a connection portion 40 which connects the second link 153 and a bearing 131 (refer to Fig. 3 described later) of the toggle support 130 by a connection pin 50 (refer to Fig. 3 described later) is formed. In the toggle mechanism 150, a connection portion which connects the second link 153 and the third link 154 by a connection pin is formed. In the toggle mechanisms 150, a connection portion which connects the third link 154 and the crosshead 151 by a connection pin is formed.

In the connection portion of the connection pin, the connection pin is fixed to be not rotatable to a bearing hole of one connection member (for example, bearing 131 of toggle support 130), a bush 55 (refer to Fig. 3) is press-fitted to the other connection member (for example, second link 153), and sliding surfaces of the bush 55 and the connection pin 50 is lubricated.

The mold clamping unit 100 includes a lubricant supply unit which supplies a lubricant to the sliding surface of the connection portion. The lubricant supply unit includes a filter 511, a cooler 512, a tank 513, and a pump 514. Moreover, the lubricant supply unit may be independently provided for each connection portion, and may have a configuration in which a flow channel branches off to be shared. The lubricant is stored in the tank 513. The pump 514 supplies the lubricant to the sliding surface of the connection portion. The lubricant which has lubricated the sliding surface is discharged from a collection connection port 69 (refer to Fig. 3 described later). Foreign substances of the discharged lubricant are removed by the filter 511, and the discharged lubricant is cooled by the cooler 512 and is stored in the tank 513 again.

Next, with respect to a structure of the connection portion, for example, the connection portion 40 in which the second link 153 and the bearing 131 of the toggle support 130 are connected by the connection pin 50 will be described with reference to Fig. 3. Fig. 3 is a cross-sectional schematic view explaining a lubrication structure of a connection pin 50 and a bush 55 in the connection portion 40 of a first embodiment. In addition, in Fig. 3, an axial direction of the connection pin 50 is a right-left direction on a paper surface. Moreover, the axial direction of the connection pin 50 is the Y direction (refer to Fig. 1).

In the connection pin 50, a supply connection port 61 is provided on an end surface of the connection pin 50, and a supply channel 62 which extends in an axial direction of the connection pin 50 from the supply connection port 61 is provided. That is, one end of the supply channel 62 includes the supply connection port 61. A supply channel 63 extends in a radial direction of the connection pin 50 is provided on the other end side of the supply channel 62, and a supply channel opening portion 64 provided on a circumferential surface of the connection pin 50 is open on the other end side of the supply channel 63. In addition, the supply channel opening portion 64 is provided to be located at an approximately center of the bush 55 in the axial direction of the connection pin 50.

Gathering grooves 66 having a ring shape are formed on an inner peripheral surface of the bush 55 which is press-fitted to the second link 153. The gathering grooves 66 are disposed on both outsides in the axial direction of the connection pin 50 such that the supply channel opening portions 64 is interposed therebetween.

Between the two gathering grooves 66, a bearing gap 65 through which the lubricant is supplied is formed between an inner peripheral surface of the bush 55 and a peripheral surface of the connection pin 50. In addition, seal grooves 56 in which O rings (seal members) 70 are disposed are provided outside the gathering grooves 66 in the axial direction. The O rings 70 seal the bearing gap 65 outside the gathering grooves 66 in the axial direction.

In addition, a recessed groove which connects two gathering grooves 66 is provided on an outer peripheral surface of the bush 55. The bush 55 is press-fitted to the second link 153, and thus, a collection channel 67 is formed between the recessed groove and an inner peripheral surface of a bearing hole of the second link 153.

In the second link 153 to which the bush 55 is press-fitted, a collection channel 68 which communicates from an inner peripheral surface of the bearing hole to an outer peripheral surface thereof is provided. An inner peripheral surface side of the collection channel 68 communicates with the collection channel 67. An outer peripheral surface side of the collection channel 68 becomes the collection connection port 69. Moreover, when the bush 55 is press-fitted to the second link 153, the bush 55 is press-fitted such that an inner peripheral surface-side opening portion of the collection channel 68 faces the recessed groove of the bush 55, and thus, the collection channel 67 can communicate with the collection channel 68.

Next, a flow of the lubricant will be described. As shown by an arrow, the lubricant supplied from the supply connection port 61 by the pump 514 flows through the supply channel 62 and the supply channel 63 and is supplied to the supply channel opening portion 64 formed on the peripheral surface of the connection pin 50. Moreover, the lubricant supplied from the supply channel opening portion 64 flows from the supply channel opening portion 64 to the gathering grooves 66 through the bearing gap 65 which is a gap between the inner peripheral surface of the bush 55 and the outer peripheral surface of the connection pin 50, and thus, the sliding surfaces of the bush 55 and the connection pin 50 are lubricated. In addition, the outsides of the gathering grooves 66 in the axial direction are sealed by the O rings 70, and thus, the lubricant is prevented from leaking from the gap between the connection pin 50 and the bush 55.

Moreover, the lubricant which has flowed to the gathering grooves 66 flows to the collection channel 67 and the collection channel 68, and is discharged from the collection connection port 69. The foreign substances of the discharged lubricant are removed by the filter 511, and the lubricant is cooled by the cooler 512 and is again stored in the tank 513.

Moreover, the connection portion 40 includes a wear detection unit which detects wear of the sliding surfaces of the connection pin 50 and the bush 55.

For example, as shown in Fig. 3, the wear detection unit has a temperature sensor 81 such as a thermocouple. The temperature sensor 81 detects a temperature of the bush 55.

Here, if the sliding surfaces of the connection pin 50 and the bush 55 wear, the surface becomes rough, and thus, a friction coefficient is higher than that of an initial state . Accordingly, when the mold clamping unit 100 is operated, compared to the initial state, a friction resistance increases, and friction heat increases. If the temperature detected by the temperature sensor 81 is a predetermined temperature or more, the controller 700 determines that the bush 55 is being worn.

Here, the bush 55 is worn, and thus, the gap between the connection pin 50 and the bush 55 is widened, and thus, there is a concern that the lubricant may leak from the gap between the connection pin 50 and the bush 55. Meanwhile, the injection molding machine 10 according to the embodiment detects the wear of the bush 55, and thus, it is possible to promote replacement of the bush 55. Accordingly, it is possible to prevent the lubricant from leaking from the gap between the connection pin 50 and the bush 55.

Moreover, the case where the temperature sensor 81 detects the temperature of the bush 55 is described. However, the present invention is not limited to this and may be configured to detect a temperature of the connection pin 50.

Moreover, in the radial directions (up-down direction on paper surface of Fig. 3) of the connection pin 50 and the bush 55, the temperature can be detected more suitably as a detection unit of the temperature sensor 81 is closer to the sliding surface.

In addition, in the radial directions (right-left direction on paper surface of Fig. 3) of the connection pin 50 and the bush 55, the closer to a center of the bush 55, the more affected the temperature of the lubricant supplied from the supply channel opening portion 64, that is, the lubricant not heated by the frictional heat. Further, the closer to both outsides, the more affected by a temperature of outside air. Accordingly, in the axial direction, it is preferable that the detection unit of the temperature sensor 81 is provided between the supply channel opening portion 64 and the gathering groove 66, and it is more preferable that the detection unit is provided in the vicinity of an intermediate portion between the supply channel opening portion 64 and the gathering groove 66.

Moreover, in circumferential directions of the connection pin 50 and the bush 55, it is preferable that the detection unit of the temperature sensor 81 is provided at a position close to a portion at which the connection pin 50 and the bush 55 abut on each other when the mold clamping unit 100 clamps the mold. The portion at which the connection pin 50 and the bush 55 abut on each other when the mold is clamped is a location at which wear easily occurs, and thus, the closer to this location, the more suitably the temperature can be detected.

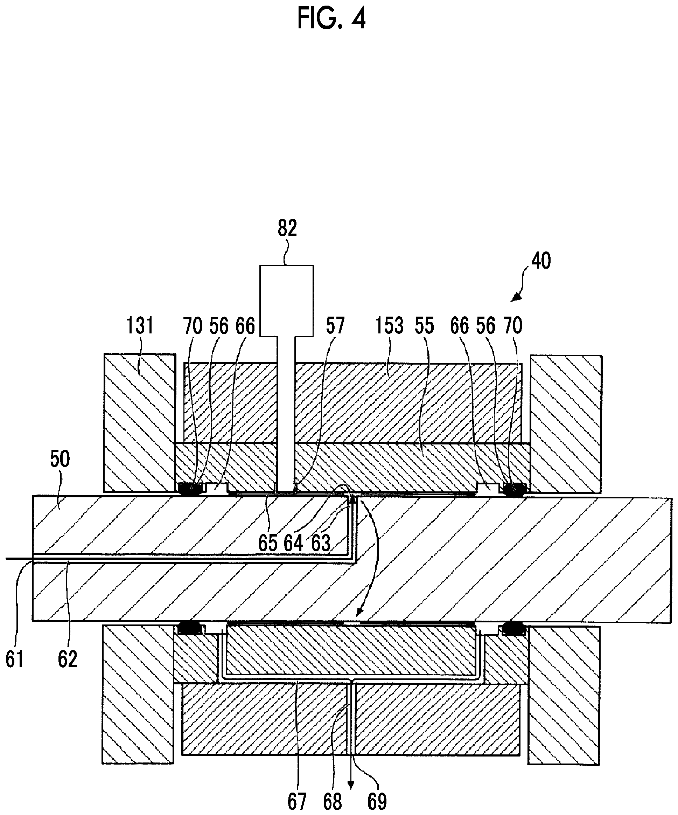

Fig. 4 is a cross-sectional schematic view explaining a lubrication structure of the connection pin 50 and the bush 55 in the connection portion 40 of a second embodiment. As shown in Fig. 4, for example, the wear detection unit includes a temperature sensor 82 such as a thermocouple. The temperature sensor 82 detects a temperature of the lubricant flowing along the bearing gap 65. A recessed portion 57 at which the lubricant is collected is provided on an inner peripheral surface of the bush 55. In addition, the detection unit of the temperature sensor 82 is disposed in the recessed portion 57. Accordingly, the temperature sensor 82 detects a temperature of the lubricant flowing along the bearing gap 65. If the temperature detected by the temperature sensor 82 is a predetermined temperature or more, the controller 700 determines that the bush 55 is being worn.

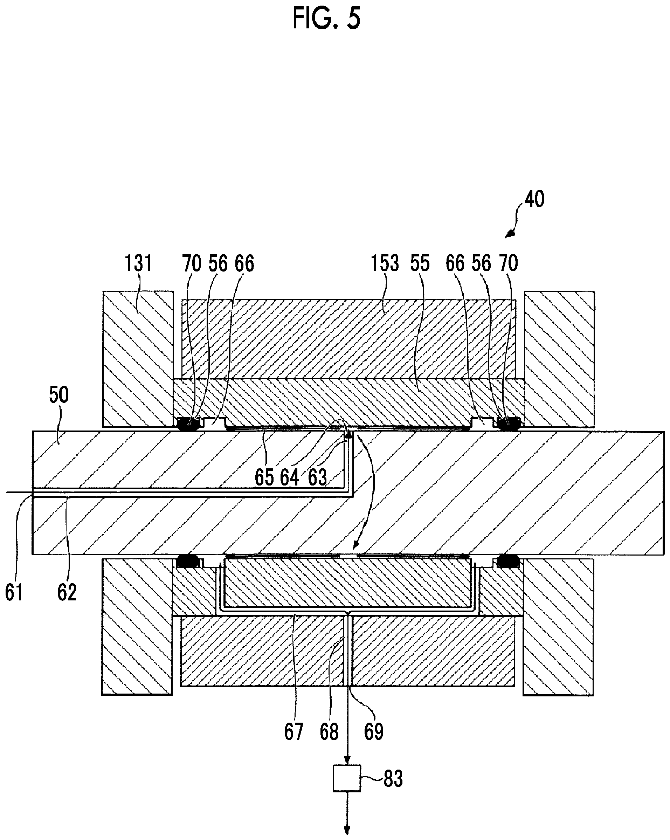

Fig. 5 is a cross-sectional schematic view explaining a lubrication structure of the connection pin 50 and the bush 55 in the connection portion 40 of a third embodiment. As shown in Fig. 5, for example, the wear detection unit includes a temperature sensor 83 such as a thermocouple. The temperature sensor 83 detects a temperature of the lubricant discharged from the collection connection port 69. If the temperature detected by the temperature sensor 83 is a predetermined temperature or more, the controller 700 determines that the bush 55 is being worn.

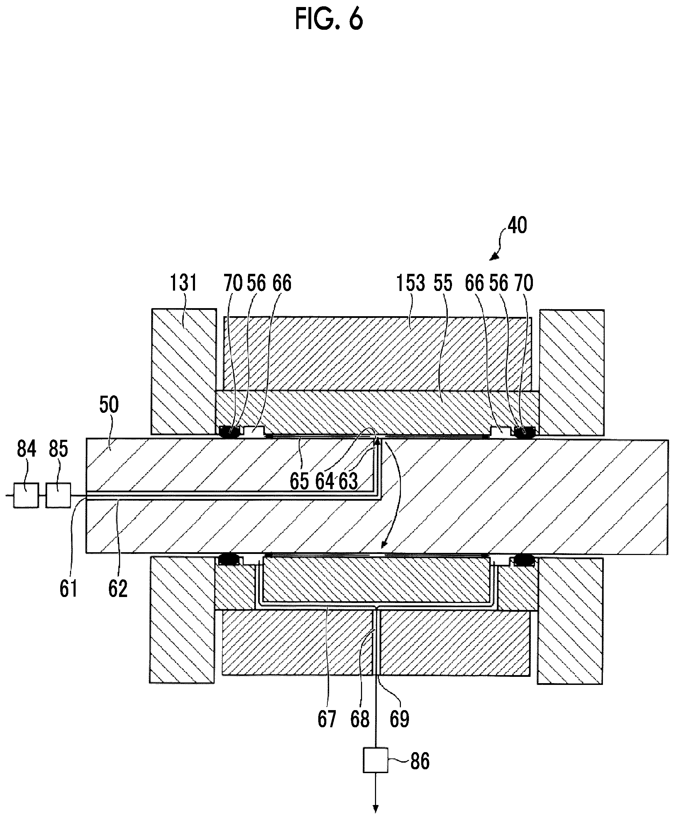

Fig. 6 is a cross-sectional schematic view explaining a lubrication structure of the connection pin 50 and the bush 55 in the connection portion 40 of a fourth embodiment. As shown in Fig. 6, the wear detection unit includes a pressure gauge 84, a flow meter 85, and a flow meter 86. The pressure gauge 84 detects a pressure of the lubricant supplied from the pump 514 to the supply connection port 61. The flow meter 85 detects a flow rate of the lubricant supplied from the pump 514 to the supply connection port 61. The flow meter 86 detects a flow rate of the lubricant discharged from the collection connection port 69.

The controller 700 determines the bush 55 is being worn if a value detected by the pressure gauge 84 is a predetermined value or less while controlling the pump 514 such that the flow rate of the lubricant supplied to the supply connection port 61 is a predetermined flow rate. That is, the bush 55 is worn, and thus, a cross-sectional area of a flow channel of the bearing gap 65 increases. Accordingly, it is possible to detect the wear by detecting the pressure while constantly maintaining the flow rate of the lubricant.

In addition, the controller 700 determines the bush 55 is being worn if a value detected by the flow meter 85 (or flow meter 86) is a predetermined flow rate or more while controlling the pump 514 such that the pressure of the lubricant supplied to the supply connection port 61 is a predetermined pressure. That is, the bush 55 is worn, and thus, the cross-sectional area of the flow channel of the bearing gap 65 increases. Accordingly, it is possible to detect the wear by detecting the flow rate while constantly maintaining the pressure of the lubricant.

Alternatively, the controller 700 detects a cumulative inflow amount of the flow meter 85 and a cumulative outflow amount of the flow meter 86 from an initial state (for example, a state immediately after the bush 55 is replaced) to the present. The controller 700 calculates a volume from a difference between the cumulative inflow amount and the cumulative outflow amount. Here, a volume of the bearing gap 65 increases due to wear. The controller 700 may determine that the bush 55 is being worn when the calculated volume is a predetermined value or more.

Further, a purge mechanism (not shown) for purging the lubricant in the connection portion 40 may be provided. For example, the purge mechanism can purge the lubricant in the connection portion 40 by supplying air (gas) from the supply connection port 61. After the lubricant is purged, the controller 700 detects the cumulative inflow amount of the flow meter 85 and the cumulative outflow amount of the flow meter 86, and calculates the volume from the difference between the cumulative inflow amount and the cumulative outflow amount. The controller 700 may determine that the bush 55 is being worn when the calculated volume is a predetermined value or more.

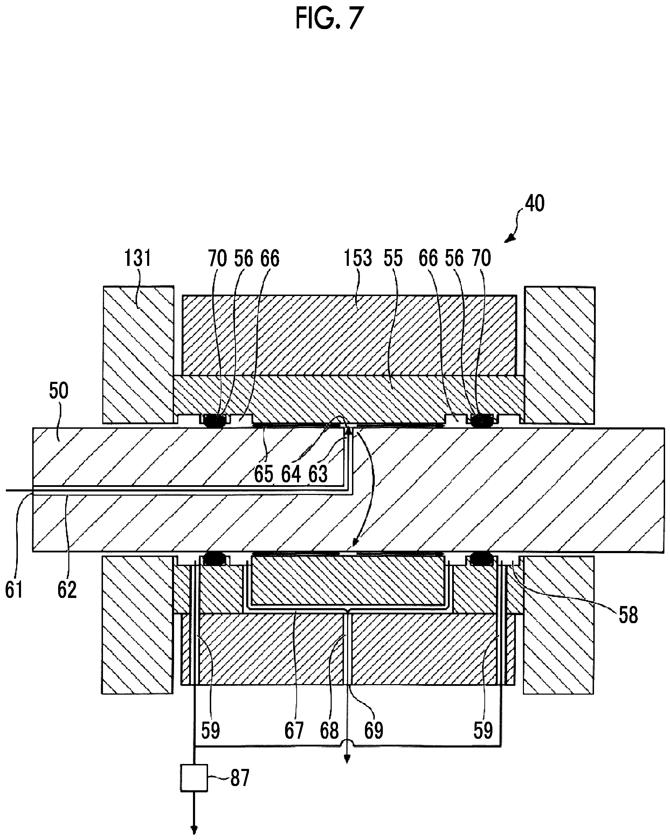

Fig. 7 is a cross-sectional schematic view explaining a lubrication structure of the connection pin 50 and the bush 55 in the connection portion 40 of a fifth embodiment. As shown in Fig. 7, drain grooves 58 having a ring shape are provided outside the O rings 70 in the axial direction. Each drain groove 58 is discharged via a drain flow channel 59 formed in the bush 55 and the second link 153. The wear detection unit has a flow meter 87. The flow meter 87 detects a flow rate of the lubricant discharged from the drain flow channel 59.

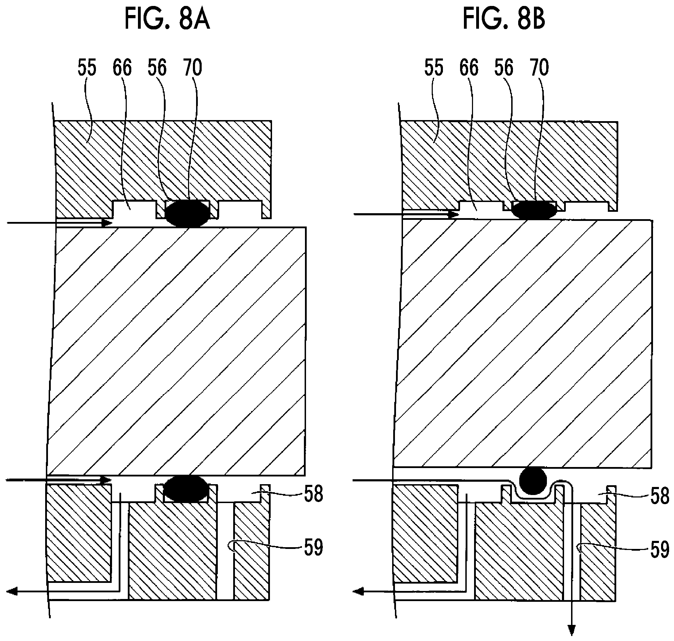

Here, a relationship between the wear and the lubricant flowing through the drain flow channel 59 will be described with reference to Figs. 8A and 8B. Figs. 8A and 8B are partially enlarged cross-sectional schematic views of the fifth embodiment. In addition, Fig. 8A shows the initial state and Fig. 8B shows a worn state. Moreover, in Figs. 8A and 8B, only the connection pin 50, the bush 55, and the O ring 70 are shown, and other configurations are not shown. Moreover, a case is described in which the connection pin 50 is pressed in an up direction on a paper surface by a mold clamping force and the upper bush 55 is being worn.

As shown in Fig. 8A, in the initial state, sealing is suitably performed by the O ring 70, and thus, the lubricant does not flow into the drain groove 58 and the drain flow channel 59.

Meanwhile, as shown in Fig. 8B, in the worn state, the connection pin 50 is shifted in the up direction. The O ring 70 is also shifted in the up direction together with the connection pin 50. Accordingly, a gap is generated between the seal groove 56 and the O ring 70 in the lower side, and thus, the lubricant flows into the drain groove 58 and the drain flow channel 59. Accordingly, the controller 700 determines that the bush 55 is being worn if the flow meter 87 detects the flow of the lubricant (or, the flow rate is a predetermined value or the like).

In addition, if the bush 55 is worn, wear powder is generated. The wear powder damages an abutment surface (seal surface) of the O ring 70 abutting on the connection pin 50, and thus, the O ring 70 is worn. According to the wear of the O ring 70, sealing performance decreases, and the lubricant flows into the drain groove 58 and the drain flow channel 59. Accordingly, the controller 700 determines that the bush 55 is being worn if the flow meter 87 detects the flow of the lubricant (or, the flow rate is a predetermined value or the like).

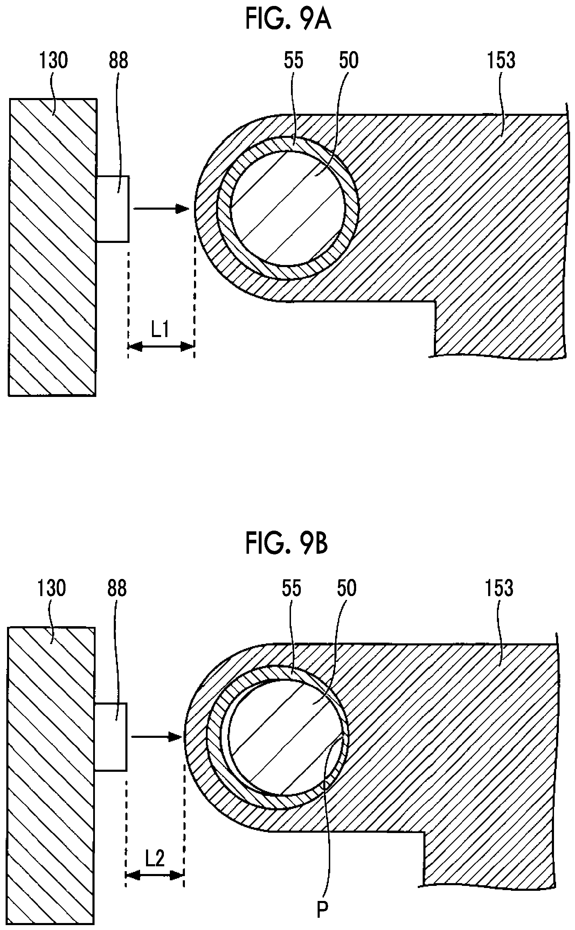

Figs. 9A and 9B are cross-sectional schematic views explaining a wear detection unit of a sixth embodiment. Moreover, Fig. 9A shows an initial state and Fig. 9B shows a worn state. As shown in Figs. 9A and 9B, for example, the wear detection unit includes a position measuring unit 88 such as a laser displacement meter.

For example, the position measuring unit 88 is fixed to the toggle support 130, and detects a position of the second link 153 when the mold is clamped. Here, as shown in Fig. 9A, in the initial state, a distance from the toggle support 130 to the second link 153 is L1.

Meanwhile, as shown in Fig. 9B, in the worn state, the bush 55 is worn near a position P at which a large force is applied to a portion between the connection pin 50 and the bush 55 when the mold is clamped, and thus, the position of the second link 153 is displaced to the toggle support 130 side.

The controller 700 determines that the bush 55 is being worn, based on the position detected by the position measuring unit 88. For example, if a distance L2 detected by the position measuring unit 88 is a predetermined value or less, it is determined that the bush 55 is being worn. In addition, the distance L1 detected by the position measuring unit 88 when the mold is clamped in the initial state is stored in advance, and if a difference between the distance L2 and the distance L1 detected by the position measuring unit 88 when the mold is clamped is a predetermined value or more, it may be determined that the bush 55 is being worn.

Moreover, the case where the position measuring unit 88 is provided in the toggle support 130 is described. However, the present invention is not limited to this, and the position measuring unit 88 may be provided in the movable platen 120. In addition, the case where the position measuring unit 88 is fixed to the toggle support 130 and a relative position of the second link 153 with respect to the toggle support 130 is detected is described. However, the present invention is not limited to this. By detecting the relative position of the second link 153 with respect to other fixing members, the wear of the bush 55 may be detected. For example, the fixing member for fixing the position measuring unit 88 may be the frame 900 or may be a cover which covers the mold clamping unit 100. For example, the position measuring unit provided in the frame 900 detects the position of the toggle support 130 and the position of the second link 153. The controller 700 may obtain a relative position of the second link 153 with respect to the toggle support 130 from the detection result to detect the wear of the bush 55. Moreover, in a case where the position of the toggle support 130 when the mold is clamped is known, the position measuring unit may be configured to detect the position of the second link 153.

In addition, the case where the position of the second link 153 is detected when the mold is clamped is described. However, the present invention is not limited to this, and a position of the first link 152 or the third link 154 may be detected.

In this way, in the wear detection unit of the sixth embodiment, the sensor is not provided inside the toggle mechanism 150. Accordingly, it is possible to improve assemblability and maintainability of the toggle mechanism 150.

Hereinbefore, the wear detection unit is described with reference to Figs. 3 to 9. However, the present invention is not limited to this, and other methods may be used as long as the wear can be detected. For example, the wear detection unit may be a sound sensor which detects a sound when the mold is opened and closed, may be a sensor which detects vibrations of the mold clamping unit 100, may be a torque sensor which detects a torque of the mold clamping motor 160, or may be a sensor which detects a degree of contamination (graphite content, iron content, copper content) of the lubricant discharged from the collection connection port 69. Moreover, the wear detection unit may be a strain gauge which is provided in the link. When the bush 55 is worn, distorted side of the link is changed. The controller 700 may determine the wear of the bush 55 based on a detected value of the strain gauge.

### Brief Description of the Reference Symbols

10: injection molding machine
40: connection portion
50: connection pin
55: bush
56: seal groove
58: drain groove (drain channel)
59: drain flow channel (drain channel)
61: supply connection port
62, 63: supply channel
64: supply channel opening portion
65: bearing gap
66: gathering groove
67, 68: collection channel (discharge channel)
69: collection connection port
70: O ring (seal member)
81 to 88: wear detection unit
120: movable platen
121: bearing
130: toggle support (rear platen)
131: bearing
150: toggle mechanism (link mechanism)
151: crosshead (link)
152: first link (link)
153: second link (link)
154: third link (link)
511: filter
512: cooler
513: tank
514: pump

## Claims

1. An injection molding machine (10) comprising:
a toggle mechanism (150) which connects a movable platen (120) and a rear platen (130), wherein the toggle mechanism (150) includes
a plurality of links (151, 152, 153, 154),
a first connection portion (40) which connects the movable platen (120) and the link (152),
a second connection portion (40) which connects the links (152, 153) to each other, and
a third connection portion (40) which connects the rear platen (130) and the link (154),
at least one of the first to third connection portions (40) includes
a bush (55),
a connection pin (50) which is inserted into the bush (55),
a supply channel (62, 63) through which a lubricant is supplied to a bearing gap (65) which is a gap between the bush (55) and the connection pin (50),
a discharge channel (67, 68) through which the lubricant is discharged from the bearing gap (65),
a seal member (70) which seals the bearing gap (65), and
a wear detection unit (81 to 88) which detects wear of sliding surfaces of the bush (55) and the connection pin (50), and
the wear detection unit (81 to 88) detects a position of at least one of the plurality links (151, 152, 153, 154), the movable platen (120), and/or the rear platen (130) in a mold opening or closing direction when a mold is clamped.

2. The injection molding machine according to claim 1,
wherein the wear detection unit (81 to 88) detects a temperature of the bush (55) or the connection pin (50).

3. The injection molding machine according to claim 1,
wherein the wear detection unit (81 to 88) detects a temperature of the lubricant of the bearing gap (65).

4. The injection molding machine according to claim 1,
wherein the wear detection unit (81 to 88) detects a temperature of the lubricant discharged from the discharge channel (67, 68).

5. The injection molding machine according to claim 1,
wherein the wear detection unit (81 to 88) detects a flow rate of the lubricant supplied to the supply channel (62, 63).

6. The injection molding machine according to claim 1 or 5,
wherein the wear detection unit (81 to 88) detects a pressure of the lubricant supplied to the supply channel (62, 63).

7. The injection molding machine according to any one of claims 1, 5, and 6,
wherein the wear detection unit (81 to 88) detects a flow rate of the lubricant discharged from the discharge channel (67, 68) .

8. The injection molding machine according to claim 1,
wherein the connection portion (40) includes a drain channel (58, 59) which is provided outside the seal member (70) in an axial direction of the connection pin (50), and
wherein the wear detection unit (81 to 88) detects a flow rate of the lubricant discharged from the drain channel (58, 59) .

## Patentansprüche

1. Spritzgießmaschine (10), umfassend:
einen Kniehebelmechanismus (150), der eine bewegliche Platte (120) und eine hintere Platte (130) verbindet,
wobei der Kniehebelmechanismus (150) umfasst:
mehrere Bindeglieder (151, 152, 153, 154),
einen ersten Verbindungsabschnitt (40), der die bewegliche Platte (120) und das Bindeglied (152) verbindet,
einen zweiten Verbindungsabschnitt (40), der die Bindeglieder (152, 153) miteinander verbindet, und
einen dritten Verbindungsabschnitt (40), der die hintere Platte (130) und das Bindeglied (154) verbindet,
zumindest einer der ersten bis dritten Verbindungsabschnitte (40) umfasst:
eine Buchse (55),
einen Verbindungsstift (50), der in die Buchse (55) eingeführt ist,
einen Zufuhrkanal (62, 63), durch den ein Schmiermittel an einen Lagerspalt (65) zugeführt wird, der ein Spalt zwischen der Buchse (55) und dem Verbindungsstift (50) ist,
einen Ausleitungskanal (67, 68), durch den das Schmiermittel aus dem Lagerspalt (65) ausgeleitet wird,
ein Dichtungselement (70), welches den Lagerspalt (65) abdichtet, und
eine Verschleißdetektionseinheit (81 bis 88), die einen Verschleiß von Gleitflächen der Buchse (55) und des Verbindungsstifts (50) detektiert, und
die Verschleißdetektionseinheit (81 bis 88) eine Position von zumindest einem der mehreren Bindeglieder (151, 152, 153, 154), der beweglichen Platte (120), und/oder der hinteren Platte (130) in einer Formöffnungs- oder -schließrichtung detektiert, wenn eine Form geklemmt ist.

2. Spritzgießmaschine nach Anspruch 1,
wobei die Verschleißdetektionseinheit (81 bis 88) eine Temperatur der Buchse (55) oder des Verbindungsstifts (50) detektiert.

3. Spritzgießmaschine nach Anspruch 1,
wobei die Verschleißdetektionseinheit (81 bis 88) eine Temperatur des Schmiermittels des Lagerspalts (65) detektiert.

4. Spritzgießmaschine nach Anspruch 1,
wobei die Verschleißdetektionseinheit (81 bis 88) eine Temperatur des Schmiermittels detektiert, das aus dem Ausleitungskanal (67, 68) ausgeleitet wird.

5. Spritzgießmaschine nach Anspruch 1,
wobei die Verschleißdetektionseinheit (81 bis 88) eine Strömungsrate des Schmiermittels, das an den Zufuhrkanal (62, 63) zugeführt wird, detektiert.

6. Spritzgießmaschine nach Anspruch 1 oder 5,
wobei die Verschleißdetektionseinheit (81 bis 88) einen Druck des Schmiermittels detektiert, das dem Zufuhrkanal (62, 63) zugeführt wird.

7. Spritzgießmaschine nach einem der Ansprüche 1, 5 und 6,
wobei die Verschleißdetektionseinheit (81 bis 88) eine Strömungsrate des Schmiermittels detektiert, das aus dem Ausleitungskanal (67, 68) ausgeleitet wird.

8. Spritzgießmaschine nach Anspruch 1,
wobei der Verbindungsabschnitt (40) einen Ablaufkanal (58, 59) umfasst, der außerhalb des Dichtungselements (70) in einer Axialrichtung des Verbindungsstifts (50) vorgesehen ist, und
wobei die Verschleißdetektionseinheit (81 bis 88) eine Strömungsrate des Schmiermittels detektiert, das aus dem Ablaufkanal (58, 59) ausgeleitet wird.

## Revendications

1. Une machine de moulage par injection (10) comprenant :
un mécanisme de bascule (150) qui relie une platine mobile (120) et une platine arrière (130),
dans laquelle le mécanisme de bascule (150) comprend
une pluralité de liaisons (151, 152, 153, 154),
une première partie de raccordement (40) qui relie la platine mobile (120) et la liaison (152),
une seconde partie de raccordement (40) qui relie les liaisons (152, 153) les unes aux autres, et
une troisième partie de raccordement (40) qui relie la platine arrière (130) et la liaison (154),
au moins l'une de la première à la troisième parties de raccordement (40) comprend
une garniture d'étanchéité (55),
une broche de connexion (50) qui est insérée dans la garniture d'étanchéité (55),
un canal d'alimentation (62, 63) par lequel un lubrifiant est fourni à un chapeau de palier (65) qui est un espace situé entre la garniture d'étanchéité (55) et la broche de connexion (50),
un canal d'évacuation (67, 68) par lequel le lubrifiant est évacué du chapeau de palier (65),
un élément d'étanchéité (70) qui ferme le chapeau de palier (65), et
une unité de détection d'usure (81 à 88) qui détecte l'usure des surfaces de glissement de la garniture d'étanchéité (55) et de la broche de connexion (50), et
l'unité de détection d'usure (81 à 88) détecte une position d'au moins l'une de la pluralité de liaisons (151, 152, 153, 154), de la platine mobile (120), et/ou de la platine arrière (130) dans une ouverture de moule, ou une direction de fermeture lorsqu'un moule est fixé.

2. La machine de moulage par injection selon la revendication 1,
dans laquelle l'unité de détection d'usure (81 à 88) détecte une température de la garniture d'étanchéité (55) ou de la broche de connexion (50).

3. La machine de moulage par injection selon la revendication 1,
dans laquelle l'unité de détection d'usure (81 à 88) détecte une température du lubrifiant du chapeau de palier (65).

4. La machine de moulage par injection selon la revendication 1,
dans laquelle l'unité de détection d'usure (81 à 88) détecte une température du lubrifiant évacué du canal d'évacuation (67, 68).

5. La machine de moulage par injection selon la revendication 1,
dans laquelle l'unité de détection d'usure (81 à 88) détecte un débit du lubrifiant fourni au canal d'alimentation (62, 63).

6. La machine de moulage par injection selon la revendication 1 ou 5, dans laquelle l'unité de détection d'usure (81 à 88) détecte une pression du lubrifiant fourni au canal d'alimentation (62, 63).

7. La machine de moulage par injection selon l'une quelconque des revendications 1, 5 et 6,
dans laquelle l'unité de détection d'usure (81 à 88) détecte un débit du lubrifiant évacué du canal d'évacuation (67, 68).

8. La machine de moulage par injection selon la revendication 1,
dans laquelle la partie de raccordement (40) comprend un canal de vidange (58, 59) qui est prévu à l'extérieur de l'élément d'étanchéité (70) dans une direction axiale de la broche de connexion (50), et
dans laquelle l'unité de détection d'usure (81 à 88) détecte un débit du lubrifiant évacué du canal de vidange (58, 59).
